# EUROPÄISCHE PATENTANMELDUNG

(11) **EP 2 724 653 A1**
(43) Veröffentlichungstag der Anmeldung: **30.04.2014**
(21) Anmeldenummer: 13189029.5
(22) Anmeldetag: 17.10.2013
(51) Int. Cl.: A47L 9/00, A47L 9/12, B01D 46/10

(54) **Filtersystem für ein Raumpflegegerät**

(30) Priorität: 23.10.2012 DE 102012219344
(71) Anmelder: BSH Bosch und Siemens Hausgeräte GmbH, 81739 München (DE)
(72) Erfinder: Gerhard, Katharina, 97421 Schweinfurt (DE); Husnik, Stephan, 97618 Hohenroth (DE)

(57) **Zusammenfassung**

Die Erfindung betrifft ein Filtersystem (1) für ein Raumpflegegerät, bei dem in mindestens einem Zwischenraum (4) eines ersten Filters (2) ein zweites Filter (5a, 5b, 5c) an der Filterfläche des ersten Filters (2) anliegt, wobei das zweite Filter (5a, 5b, 5c) mindestens ein Polymermaterial umfasst. Die Erfindung betrifft ferner Verfahren, die es erlauben, ein solches Filtersystem (1) herzustellen.

Der erreichbare Vorteil ist, dass die Geräuschentwicklung eines Raumpflegegerätes durch ein solches Filtersystem (1) und die entsprechenden Herstellungsverfahren verringert werden kann, ein solches Filtersystem (1) einfacher und kompakter gebaut werden kann, und bestehende Filtersysteme (1) ohne großen Aufwand durch das neue Filtersystem (1) ersetzt werden können.

## Beschreibung

### Gebiet der Erfindung

Die Erfindung betrifft ein Filtersystem für ein Raumpflegegerät nach dem Oberbegriff des Anspruchs 1, sowie Verfahren zur Herstellung eines Filtersystems für ein Raumpflegegerät gemäß den Ansprüchen 12 und 17.

### Hintergrund der Erfindung

Aus dem Stand der Technik ist beispielsweise die WO 2010/ 024 526 A1 bekannt, die einen Staubsauger mit einer Filteranordnung zeigt, die sich vor oder hinter dem Saugmotor befinden kann, wobei die Filteranordnung ein erstes Filter und ein ergänzendes Filter umfasst. Das erste Filter umfasst ein poröses Material und besitzt einseitig oder beidseitig Vorsprünge und das ergänzende Filter umfasst ein HEPA-Filter, wobei das erste Filter mit dem ergänzenden Filter gesichert oder verklebt ist. Nachteilig an diesem Stand der Technik ist, dass eine solche Filteranordnung einen verhältnismäßig großen Bauraum benötigt.

Die EP 1 239 760 B1 zeigt ein ähnliches Filtersystem, bei der im Gegensatz zur WO 2010/ 024 526 A1 ein hohler Kreiszylinder aus einem vielfach gefalteten HEPA-Filter gebildet ist und in dem inneren Hohlraum des Kreiszylinders ein Filterkern bereitgestellt ist. Der Filterkern umfasst einen zylindrischen Schaumfilter, dessen radial äußere Oberfläche mit einem weiteren Filter bedeckt ist, das ein elektrostatisches Filter ist. Das elektrostatische Filter liegt an der Innenseite des Kreiszylinders an, der vom HEPA-Filter gebildet wird. Der Filterkern kann in den Innenraum des von dem HEPA-Filter gebildeten Zylinders eingeschoben und wieder aus ihm entfernt werden, um den Filterkern reinigen zu können.

Weiter offenbart die DE 42 40 172 A1 einen Staubsauger mit einem Staubfilterbeutel und einem separaten Feinstaub- oder Hygienefilter im Abluftstrom des Sauggebläses, wobei das Feinststaubfilter in einem am Staubsauger vorgesehenen Filterkassettenraum auswechselbar angeordnet und ein- oder mehrlagig ausgebildet ist, und das Hygienefilter eine zickzackförmig, mäanderförmig oder dergleichen gefaltete Form erhält, wobei die durch den Faltvorgang gebildeten Zwischenräume zumindest auf einer Filterseite ganz oder teilweise mit einem geruchsbindenden und/oder überdeckenden Filtermaterial (Geruchfilter) gefüllt sind. Das Filtermaterial kann granulat- oder pulverförmig sein, vorzugsweise wird Aktivkohle verwendet. Ein solches Feinstfilter besitzt eine erhöhte Standzeit. Außerdem wird eine Geruchbelästigung wirksam verhindert. Nachteilig an diesem Stand der Technik ist, dass die in den Zwischenraum der Faltung eingebrachte Aktivkohle alleinig eine zusätzliche Filterwirkung zur Folge haben kann.

### Der Erfindung zugrundeliegende Aufgabe

Der Erfindung liegt die Aufgabe zugrunde, ein eingangs beschriebenes Filtersystem zu verbessern. Insbesondere sollen Nachteile der genannten Filtersysteme überwunden werden können. Hierzu soll ein Filtersystem bereitgestellt werden, das bauraumsparend, kompakt und energieeffizient ist. Speziell soll ein solches Filtersystem zur Geräuschreduzierung bei einem Raumpflegegerät beitragen. Darüber hinaus soll insbesondere ein Filtersystem bereitgestellt werden, das langlebiger ist. Des Weiteren soll insbesondere ein Filtersystem bereitgestellt werde, das bereits bestehende Filtersysteme einfach ersetzen kann. Schließlich sollen Verfahren geschaffen werden, die die Herstellung von verbesserten Filtersystemen erlauben.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch ein Filtersystem nach Anspruch 1 und Verfahren nach den Ansprüchen 12 und 17.

Ein Filtersystem im Sinne der Erfindung ist ein Schichtsystem aus unterschiedlichen oder gleichen Filtermaterialien, die einander berühren und ein von einem Raumpflegegerät eingesaugtes Medium, bevorzugt Luft oder auch Wasser, von Kontaminationen, bevorzugt Staub, Schmutz, Haaren, Sand, Geruchsträgern oder auch Giftstoffen reinigt.

Ein Raumpflegegerät im Sinne der Erfindung ist ein Haushaltsgerät, das die Reinigung einer Räumlichkeit und darin enthaltenen Gegenständen, besonders dessen Bodenbeläge, sowie beispielsweise Möbeln oder Tapeten, von oben genannten Kontaminationen ermöglicht. In einer Ausführungsform ist es elektrisch betreibbar. Es umfasst für gewöhnlich eine Motorgebläseeinheit. Eine Einsaugdüse, die lösbar oder permanent mit einem Einsaugrohr verbunden ist, das seinerseits durch einen für gewöhnlich lösbaren Saugluftschlauch mit dem Gehäuse des Raumpflegegeräts verbunden ist. Im Gehäuse, das für gewöhnlich die Motorgebläseeinheit umfasst, ist zur Aufnahme des Staubs in der Regel eine Staubsammelkammer vorgesehen. Sie kann lösbar mit dem Gehäuse verbunden sein und einen Staubsaugerbeutel zur Staubaufnahme umfassen. Bei anderen Geräten wird die Kontamination durch Wirbeltechnologie unter Anwendung von Zentrifugalkräften von dem eingesaugten Medium abgeschieden und in einem Bereich einer dazu eingesetzten Staubabscheideinheit oder einer angrenzenden Staubsammelkammer aufgenommen. Entsprechend kann ein Raumpflegegerät ein Staubsauger mit Beuteltechnologie oder ein Staubsauger mit Zentrifugaltechnologie sein, bevorzugt ein Staubsauger mit Wirbelsenkabscheidetechnologie. Die gereinigte Luft wird dann aus einer Luftauslassöffnung wieder in die vom Staub gereinigte Räumlichkeit ausgelassen. Ein solcher Staubsauger kann sowohl ein Kanisterstaubsauger, ein Standstaubsauger, ein Handstaubsauger oder ein Stand-Upright-Staubsauger sei. In einem Raumpflegegerät im Sinne der Erfindung kann im Saugmedienstrom zwischen Einsaugdüse für das staubbeladene Medium und Auslassöffnung für das staubbefreite Medium ein erfindungsgemäßes Filtersystem angeordnet sein.

Eine Membran ist im Sinne der Erfindung mindestens für das Medium Luft, bevorzugt aber auch für das Medium Wasser durchlässig und weist Filtereigenschaften auf, die das durch das Filter strömende Medium von einer oder mehreren vorgenannten Kontaminationen reinigt, wobei jede Kontaminationsreduzierung zwischen mehr als 0 % und 100 % als Reinigung im Sinne der Erfindung gilt.

Eine Begrenzungsfläche im Sinne der Erfindung ist die Fläche, die die Umfangslinie des Filters real oder virtuell eingrenzt. Eine Filterumrandung eines Filtergehäuses, z.B. die Fassung eines Filter-Cartridges oder ein Saugkanal, in den das Filtersystem ohne weitere Fassung eingesetzt ist, sind reale Begrenzungsflächen. Eine imaginär um das Filter angeordnetegeometrische Figur, die das Filtersystem exakt umgibt, ohne das eine reale Umrandung vorhanden ist, ist eine virtuelle Begrenzungsfläche.

Dadurch, dass ein Filtersystem für ein Raumpflegegerät gemäß des Oberbegriffes des Anspruchs 1 einen zweiten Filter mit einem Polymermaterial umfasst und das zweite Filter an der Filterfläche des ersten Filters in mindestens einem Zwischenraum des ersten Filters anliegt, kann eine Geräuschbelastung, die durch das erste Filter verursacht wird, durch das zweite Filter um mehr als 2 dB vermindert werden. Es hat sich nämlich gezeigt, dass Luftverwirbelungen, die beim Durchströmen des ersten Filters unmittelbar hinter dessen Oberfläche verursacht werden, durch das zweite Filter wirkungsvoll reduziert werden können, wodurch die verbesserte Geräuschreduzierung erreicht werden kann. Insofern kann eine Verbesserung beispielsweise gegenüber ebenen oder zylinderförmigen Filtersystemen erreicht sein, bei denen ein erstes Filter und ein zweites Filter ausschließlich so aneinander zur Anlage gebracht werden, dass das zweite Filter nur an äußeren Oberflächenpunkten des ersten Filters und nicht in seinen beispielsweise durch Faltung gebildeten Zwischenräumen am ersten Filter anliegt. Außerdem kann die Stabilität des ersten Filters verbessert sein, wenn es durch das zweite Filter in seinen Zwischenräumen abgestützt wird. Bringt man das zweite Filter in die Zwischenräume des ersten Filters anliegend ein, kann also das Filtersystem sowohl als Staubfilter fungieren, als auch geräuschreduzierend wirken. So kann bei gleichbleibendem Platzbedarf eine zusätzliche Wirkung des Filters erreicht werden. Ein verbessertes Filtersystem kann somit kompakter gebaut werden und dadurch gut handhabbar sein.

Neuartige Verfahren zur Herstellung eines Filtersystems für ein Raumpflegegerät erlauben es, solche Filter, bei denen das zweite Filter mindestens ein Polymermaterial umfasst, und das zweite Filter mindestens in einem Zwischenraum des ersten Filters, der dadurch gebildet wird, dass das erste Filter eine Filterfläche aufweist, die gegenüber einer minimalen, von der mindestens einen Begrenzungsfläche umschlossenen Fläche vergrößert ist, an dessen Filterfläche anliegt, überhaupt erst herzustellen.

Dadurch dass das zweite Filter an der Filterfläche des ersten Filters anliegt, kann sichergestellt werden, dass zwei benachbarte Filterflächen an einer Faltung des ersten Filters einen Abstand zueinander aufweisen, sodass die gesamte Filterfläche des ersten Filters einer staubbeladene Saugluft als Filterfläche und/oder als Abluftfläche zur Verfügung steht. Mit anderen Worten: da die Filterfläche des ersten Filters mit einem zweiten Filter bedeckt ist, können sich nicht die Filterflächen des erten Filters an einer Faltung berühren. Somit kann auf zusätzliche Abstandshalter für das erste Filter in Form von Kleberaupen oder Klammern verzichtet werden, welche die aktive Filteroberfläche des ersten Filters nachteilig verringern.

Ein Verfahren nach Anspruch 12 stellt grundsätzlich sicher, dass ein Filter hergestellt werden kann, der die genannten Vorteile aufweisen kann. Eine besonders einfache Methode zur Herstellung eines solchen Filtersystems ist das Verfahren nach Anspruch 17. Erzeugt man die Zwischenräume zwischen Abschnitten des ersten Filters erst nachdem man das zweite Filter mit dem ersten Filter zumindest teilweise flächig in Kontakt gebracht hat, so lässt sich besonders einfach ein erfindungsgemäßes Filtersystem herstellen. Dabei ist diese Herstellungsmethode nicht auf solche Filtersysteme beschränkt, bei denen das zweite Filter mindestens ein Polymermaterial umfasst.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Bevorzugt ist, dass das erste Filter ein Hochleistungs-Partikelfilter oder ein Hochleistungs-Schwebstofffilter ist, insbesondere ein EPA-, HEPA-, oder ein ULPA-Filter umfasst. Hier sei vollumfänglich auf die DIN EN 1822-1:2011-01 verwiesen. HEPA steht für High-Efficiency Particulate Air und ULPA für Ultra Low Penetration Air.Diese Art von Feinstaubfiltern ist dem Fachmann aus einer Vielzahl von Anwendungen in Staubsaugern grundsätzlich bekannt. Die Nutzung eines Partikel- oder Schwebstofffilters dieser Klassen kann den Vorteil haben, dass eine besonders gute Feinstaubreduzierung ermöglicht wird. Ein Partikel- oder Schwebstofffilter ist als erstes Filter besonders sinnvoll, wenn das Filtersystem zur Anordnung im Saugmedienstrom zwischen Staubsammelkammer und Motorgebläseeinheit vorgesehen ist. Das Filtersystem kann aber auch bevorzugt im Saugmedienstrom unmittelbar vor einer Luftaustrittsöffnung aus dem Gehäuse des Staubsaugers angeordnet werden. Auch mehrere solche Filtersysteme an unterschiedlichen Positionen im Saugluftstrom sind in einer Ausführungsform bevorzugt. Bevorzugt ist, dass das erste Filter einstückig ausgebildet ist. Alternativ kann er aber auch aus einzelnen Segmenten zusammengefügt sein. Bevorzugt entspricht das Schwebstofffilter einem Hochleistungs-Partikelfilter der Klasse E12, nochmals bevorzugt ein Hochleistungs-Schwebstofffilter der Klasse H13. Das Schwebstoffilter hat bevorzugt ein Verhältnis von Filteroberfläche zu Querschnittsfläche von 5:1, besonders bevorzugt ein Verhältnis von Filteroberfläche zu Querschnittsfläche von 10: 1. Es sind bevorzugt 80 Faltungen pro Längeneinheit vorhanden. Als eine Faltung wird eine Steigungsumkehr der Filteroberfläche angesehen. So ergibt sich bei typischen Außenmaßen des gefalteten Filters über drei Faltungen hinweg ein Faltungsabstand von 4 mm. Die doppelte Faltungsamplitude des ersten Filters beträgt bevorzugt 20 mm, was eine besonders kompakte Bauart des Filtersystems erlauben kann. Das erste Filter kann auch ein Wirrfaservlies umfassen oder daraus bestehen, z. B. GSB-100, einem Produkt der Fa. 3M. Bevorzugt ist das erste Filter allgemein ein Gewebe, ein Gewirk, ein Geflecht, eine Folie, eine Pappe, ein Papier oder ein Vlies.

In einer bevorzugten Ausführungsform ist das Material des zweiten Filters offenporig. Der Vorteil eines offenporigen Materials kann sein, dass das Polymermaterial dann von Saugluft durchströmt werden kann, was eine stärkere Schallleistungs- oder Geräuschreduzierung und verbesserte Filterwirksamkeit ermöglicht. Die durchströmende Luft kann sich mehrfach in freie Räume des Materials ausdehnen, dort labyrinthartig umgelenkt und dadurch verlangsamt werden. Durch das Durchströmen des Filterquerschnitts auf einem verlängerten Transportweg durch das offenporige Material können verbessert Partikel daran abgelagert werden. Ein geeignetes offenporiges Polymermaterial ist beispielsweise ein retikulierter Schaumstoff, wie er beispielsweise aus der DE 10 2006 055 377 A1 bekannt ist. Dieses Dokument ist bezüglich seiner Informationen zu retikuliertem Schaumstoff durch Zitat vollumfänglich Teil der vorliegenden Offenbarung. Durch seine Verwendung ist zusätzlich eine Brandschutzwirkung erreichbar. Alternativ kann aber auch ein geschlossenporiges Material verwendet werden, in dessen Volumen ein labyrinthartiges Netzwerk mit einer Vielzahl von Aus- und Eingängen und Verzweigungen angelegt wurde, so dass das geschlossenporige Material die Wände dieses Gängesystems bildet. Auch auf diese Weise kann ein geeignetes System mit freien Räumen erzeugt werden, das von Saugluft durchströmt werden kann.

Bevorzugt kommt als Material für das zweite Filter ein organisches Polymermaterial in Frage. Dies kann besonders kostengünstig herstellbar sein. Bevorzugt ist dieses organische Polymermaterial offenporig. Bevorzugt ist das Material ein Elastomer. Dadurch kann eine besonders gute Verformbarkeit erreicht werden, was die Verarbeitung erleichtert und das Anliegen des zweiten Filters am ersten Filter verbessern kann. Ebenfalls bevorzugt ist ein aufgeschäumtes Polymer. Dieses Material kann besonders leicht sein und Hohlräume schaffen, so dass eine verbesserte Filterwirksamkeit wie oben beschrieben erreicht werden kann. Gleichfalls bevorzugt ist ein Filtermaterial aus Polymerfäden. Dieses kann einfach zu verarbeiten sein, stabil sein, und es können durch geeignetes verweben Freiräume erzeugt werden, die die Filterwirksamkeit fördern. Auch bevorzugt ist ein Kunststoffmaterial. Dieses kann ebenfalls die Filterwirksamkeit sicherstellen und verbessern. Besonders bevorzugt ist, dass das zweite Filter mindestens ein Material aus der Gruppe Polyurethan, Polyethylen, Polystyrol, Polypropylen (PU, PE, PS und PP) und Melamin umfasst. Nochmal besonders bevorzugt ist das Material des zweiten Filters ein Schaum, der mindestens ein Material aus der Gruppe PU, PE, PS, PP und Melamin umfasst. Nochmals besonders bevorzugt besteht der Schaum aus einem der Materialien aus der Gruppe PU, PE, PS, PP und Melamin. PU-, PE-, PS-, PP- und Melaminschäume sind bekannte Materialien zur Schalldämmung und können somit die Geräuschreduzierung durch ein erfindungsgemäßes Filtersystem besonders positiv beeinflussen. Bevorzugt ist die Porenanzahl mindestens 20 Poren pro Inch (pores per inch ppi), besonders bevorzugt mindestens 30, 60, 90, 120, 140, 150, 180, 200 oder 250 ppi. Bevorzugt ist die Porenanzahl höchstens 300 ppi, besonders bevorzugt höchstens 280, 250, 230, 200, 180, 150, 140, 120, 90, 60 oder 30 ppi. Besonders bevorzugt ist die Porenzahl 200 ppi. Nochmals besonders bevorzugt ist die Porenzahl 120 ppi.

Bevorzugt ist, dass das zweite Filter einseitig am ersten Filter angeordnet ist. Dadurch kann der Vorteil erreicht werden, dass das Filtersystem besonders einfach herzustellen ist. Außerdem kann das zweite Filter somit auf einfache Weise die Abschnitte des ersten Filters, die den mindestens einen Zwischenraum bilden, gegeneinander stützen, so dass der Winkel zwischen zwei benachbarten Filterabschnitten dauerhaft unverändert bleibt und nicht z.B. durch Luftströmung oder Erschütterung verändert wird. Bevorzugt ist, dass das zweite Filter auf der Seite des ersten Filters, die er bedeckt, mindestens 30 % der Oberfläche des ersten Filters bedeckt. Besonders bevorzugt ist, dass er 50 % bedeckt, nochmals bevorzugt 60% oder 80 %. Ganz besonders bevorzugt ist, dass das zweite Filter auf der Seite des ersten Filters, die er bedeckt, 100 % der Oberfläche des ersten Filters bedeckt. Mit zunehmender Bedeckung kann die Wirksamkeit des zweiten Filters deutlich verbessert und bevorzugt auch die Stützwirkung verstärkt sein. Auf der Seite des ersten Filters, an dem das zweite Filter nicht angeordnet ist, kann ein Aktivmaterial, ein geruchsbindendes Material wie z.B. Aktivkohle, oder ein geruchsummantelndes Material, wie z.B. Klathrate, die als Bionic-Filter am Markt erhältlich sind, beispielsweise als Geruchsfilter oder als anderes Filter angeordnet werden. Bevorzugt können diese Aktivmaterialien und/oder Klathrate in Zwischenräumen des ersten Filters angeordnet werden. Alternativ kann das zweite Filter beidseitig am ersten Filter angeordnet sein.

Es ist bevorzugt, dass das zweite Filter dem ersten Filter bezogen auf die Lufttransportrichtung nachgelagert ist. Die Lufttransportrichtung im Sinne der Erfindung ist jene Richtung, in die ein eingesaugtes Medium, z.B. Luft, grundsätzlich transportiert wird, in der Regel also die Richtung, die von der Einsaugöffnung über die Staubsammelkammer zur Luftaustrittsöffnung des Staubsaugers weist. Vorteilhaft kann sein, dass Geräusche, die durch beispielsweise die Verwirbelungen der Luft nach dem Durchströmen des ersten Filters entstehen, vermindert werden können. Verwirbelungen, die an der Oberfläche des ersten Filters auf der Luftaustrittsseite des Filters hervorgerufen werden können, können durch das zweite Filter, das ein Polymermaterial umfasst, reduziert werden. Alternativ ist das zweite Filter dem ersten Filter bezogen auf die Lufttransportrichtung vorgelagert. Vorteil kann sein, dass das zweite Filter das erste Filter vor übermäßiger Verschmutzung schützt, die zum Beispiel dann eintreten kann, wenn der Staubsaugerbeutel reißt. Dies kann besonders dann von Nutzen sein, wenn das erste Filter ein Schwebstofffilter, insbesondere ein HEPA-Filter ist, das besonders feinporig ist. Alternativ kann das zweite Filter dem ersten Filter sowohl vor- als auch nachgelagert sein. Erreichbarer Vorteil dieser Ausführungsform kann sein, dass man vorgelagert und nachgelagert jeweils einen zweiten Filter mit einer anderen Porenzahl oder auch bestehend aus anderen Materialien einsetzen kann. In diesem Fall wäre das zweite Filter bevorzugt zweiteilig ausgeführt. Bevorzugt weist in diesem Fall der eine zweite Filter eine Porenzahl von 120 ppi auf, während der andere zweite Filter eine Porenzahl von 200 ppi aufweist. Besonders bevorzugt weist der vorgelagerte zweite Filter eine Porenzahl von 200 ppi und der nachgelagerte zweite Filter eine Porenzahl von 120 ppi auf. So kann das erste Filter sowohl gegen eine übermäßige Verschmutzung gesichert werden, als auch die Entstehung von Geräuschen durch die durchströmende Luft gemindert werden. Somit kann ein Filtersystem erreicht werden, das mehrere Funktionen in kompakter Bauweise bereitstellt.

Bevorzugt ist, dass das zweite Filter mindestens einen Zwischenraum des ersten Filters zu mindestens 30 % ausfüllt. Dadurch, dass mindestens 30% des Volumens eines Zwischenraums ausgefüllt sind, kann der Vorteil erreicht werden, dass die Wirksamkeit des zweiten Filters besonders in Bezug auf die Geräuschreduktion verbessert sein kann. Bevorzugt ist, dass das zweite Filter mindestens 50 % mindestens eines Zwischenraums ausfüllt. Nochmals bevorzugt ist, dass es 75 % ausfüllt, nochmals bevorzugt 90 %. Besonders bevorzugt ist aber, dass das zweite Filter mindestens einen Zwischenraum des ersten Filters vollständig ausfüllt. Besonders bevorzugt sind alle Zwischenräume des ersten Filters jeweils mit dem gleichen Füllgrad von dem zweiten Filter ausgefüllt. Alternativ können sie aber auch zu unterschiedlichen Anteilen zwischen bevorzugt mindestens 30 %, 40 %, 50 %, 60 % oder 70 % und bevorzugt höchstens 40 %, 50 %, 60 %, 70 %, 80 %, 90 % oder 100 % ausgefüllt sein, beispielsweise, wenn im Luftkanal an unterschiedlichen Stellen unterschiedliche Strömungsgeschwindigkeiten vorherrschen, für die jeweils ein optimaler Füllgrad bereitgestellt werden soll, um Material für das zweite Filter sparen zu können und trotzdem eine zufriedenstelle Geräuschreduzierung erreichen zu können. Bevorzugt ist, dass mindestens ein Zwischenraum des ersten Filters durch das zweite Filter so gefüllt ist, dass unter Berücksichtigung des Füllgrades eine möglichst große Oberfläche des ersten Filters bedeckt ist. Das bedeutet, dass beispielsweise bei einem Füllgrad von 30% des Volumens des Zwischenraums das zweite Filter bevorzugt derart eingerichtet ist, dass mit der vorhandenen Menge des zweiten Filters, die 30% des Volumens des Zwischenraums ausfüllt, erst ein möglichst großer Anteil der Oberfläche des ersten Filters bedeckt wird, bevor die Dicke einer so erzeugten Deckschicht vergrößert wird.

In einer bevorzugten Ausführungsform ist das zweite Filter in mindestens einen Zwischenraum des ersten Filters mit Übermaß eingepresst. Besonders bevorzugt ist, dass das zweite Filter in die Hälfte der Zwischenräume des ersten Filters mit Übermaß eingepresst ist. Nochmals besonders bevorzugt ist, dass das zweite Filter in alle Zwischenräume des ersten Filters mit Übermaß eingepresst ist. Dies kann den Vorteil haben, dass ein besonders guter Kontakt zwischen dem zweiten Filter und der Oberfläche des ersten Filters in den Zwischenräumen erreicht werden kann, sowie eine besonders wirkungsvolle Geräuschreduzierung. Alternativ zu einer Verpressung kann das zweite Filter zumindest punktuell mit dem ersten Filter verschweißt oder verklebt sein. Bevorzugt ist ein Übermaß von 5 %, nochmals bevorzugt ein Übermaß von 15 %, besonders bevorzugt allerdings ein Übermaß von etwa 10 %. So kann gut zwischen einer einfachen Herstellbarkeit und einem besonders engen Anliegen der Filter aneinander abgewogen werden.

Bevorzugt ist, dass das zweite Filter einteilig ausgeführt ist. Der Vorteil kann darin bestehen, dass so ein einteiliges Filter einfach und günstig herzustellen ist, und einfach und schnell am ersten Filter angeordnet werden kann, beispielsweise durch reißverschlussartiges Paaren von erstem und zweitem Filter. Dieses reißverschlussartige Paaren kann bevorzugt unter Krümmung des zweiten Filters, des ersten Filters oder auch beider Filter gemeinsam besonders komfortabel und wirksam erfolgen. Alternativ kann das zweite Filter auch mehrteilig ausgeführt sein. Dadurch kann eine erhöhte Flexibilität in der Anwendung erreicht werden, falls unterschiedliche Mängel von Zwischenräumen, z.B. aufgrund von Produktionstoleranzen zu erwarten sind. So können einzelne Segmente oder auch Segmentgruppen des zweiten Filters in die Zwischenräume des ersten Filters eingebracht werden. Auch kann das zweite Filter vielteilig sein. Ein bevorzugtes zweites Filter, das vielteilig ist, besteht aus einzelnen Flocken. Daraus kann sich der Vorteil ergeben, dass das zweite Filter unabhängig von den Maßen des ersten Filters und der Form seiner Zwischenräume in großen Mengen vorgehalten werden kann. Im Prinzip kann dann jeder beliebige erste Filter mit den Flocken des zweiten Filters befüllt werden. Diese können mithilfe eines Rütteltisches in den Zwischenräumen verteilt werden. Anschließend können die Flocken noch darin verpresst oder auch verklebt werden. Bevorzugt sind aufgrund ihrer geräuschdämmenden Eigenschaften für die Flocken Materialien, die PU, PE, PS, PP und Melamin umfassen, bevorzugt deren Schaumstoffe. Besonders bevorzugt sind Flocken, die aus PU, PE, PS, PP und Melamin bestehen, bevorzugt deren Schaumstoffe.

Bevorzugt ist, dass das erste Filter im Querschnitt ein Profil von nebeneinander angeordneten geometrischen Figuren aufweist. Vorteil kann sein, dass auf diese Weise ein einfach herstellbares Querschnittsprofil erreicht wird, das eine große Oberfläche für das erste Filter ermöglicht. Nebeneinander angeordnete Dreiecke sind bevorzugt, besonders bevorzugt spitzwinklige Dreiecke. Bevorzugt weist eine Faltung zwischen zwei benachbarten Filterabschnitten, die einen Zwischenraum zwischen sich bilden, einen Öffnungswinkel von 90° oder weniger auf. Besonders bevorzugt ist der Winkel größer als 10°, nochmals besonders bevorzugt größer als 20°, nochmals besonders bevorzugt größer als 30°, nochmals besonders bevorzugt größer als 40°, nochmals besonders bevorzugt größer als 50°. Winkel der genannten Größe erlauben es, das zweite Filter besonders einfach in die Zwischenräume des ersten Filters einbringen zu können, beispielsweise durch reißverschlussartiges Einrollen der Filter ineinander. Allerdings sind, um die Fläche des ersten Filters möglichst groß werden zu lassen, Öffnungswinkel der Faltung von kleiner als 60° bevorzugt, besonders bevorzugt kleiner als 50°, nochmals besonders bevorzugt kleiner als 40°, nochmals besonders bevorzugt kleiner als 30°, nochmals besonders bevorzugt kleiner als 20°, nochmals besonders bevorzugt kleiner als 10°, nochmals besonders bevorzugt kleiner als 5°, nochmals besonders bevorzugt kleiner als 1°. Besonders bevorzugt ist jedoch ein Winkel von 30°. Ein Winkel dieser Größe kann einen guten Kompromiss zwischen einfachem einbringen des zweiten Filters in die Zwischenräume des ersten Filters und dem Bereitstellen einer großen Filteroberfläche des ersten Filters darstellen. Alternativ zur Dreiecksform kann der Querschnitt im Profil einer Sinuskurve entsprechen, oder eine allgemeine Wellenform aufweisen, oder rundmäanderförmig oder eckig-mäanderförmig sein. Die Profile können auch gekappt sein, so dass beispielsweise die Dreiecke dem Querschnitt von Kegelstümpfen oder Trapezen entsprechen oder die Wellenform nur als Wiederholung von Wellensegmenten ausgeführt ist. Die Formen können unmittelbar aneinander angrenzend angeordnet sein oder durch Abschnitte getrennt sein, die eine ebene Querschnittsform aufweisen. Auch können sich unterschiedliche Profilformen abwechseln. All diese Ausführungsformen führen dazu, dass die Filterfläche des ersten Filters gegenüber der Begrenzungsfläche, die sie umschließt, vergrößert ist, so dass das erste Filter eine sehr große Fläche bereitstellen kann, die vom eingesaugten Medium, zum Beispiel Luft, durchströmt werden kann.

In einer bevorzugten Ausführungsform weist das zweite Filter im Querschnitt ein Profil von nebeneinander angeordneten geometrischen Figuren auf. Vorteilhaft kann hierbei sein, dass ein einfach herstellbares Querschnittsprofil erreicht wird, das eine große Oberfläche für das zweite Filter ermöglicht und eine gute Anpassbarkeit des zweiten Filters an das erste Filter erlaubt. Nebeneinander angeordnete Dreiecke sind bevorzugt, besonders bevorzugt spitzwinklige Dreiecke. Bevorzugt weist eine Faltung zwischen zwei benachbarten Filterabschnitten, die einen Zwischenraum zwischen sich bilden, einen Öffnungswinkel von 90° oder weniger auf. Besonders bevorzugt ist der Winkel größer als 10°, nochmals besonders bevorzugt größer als 20°, nochmals besonders bevorzugt größer als 30°, nochmals besonders bevorzugt größer als 40°, nochmals besonders bevorzugt größer als 50°. Winkel der genannten Größe erlauben es, das zweite Filter besonders einfach in die Zwischenräume des ersten Filters einbringen zu können, beispielsweise durch reißverschlussartiges Einrollen der Filter ineinander. Allerdings sind, um die Fläche des ersten Filters möglichst groß werden zu lassen, Öffnungswinkel der Faltung von kleiner als 60° bevorzugt, besonders bevorzugt kleiner als 50°, nochmals besonders bevorzugt kleiner als 40°, nochmals besonders bevorzugt kleiner als 30°, nochmals besonders bevorzugt kleiner als 20°, nochmals besonders bevorzugt kleiner als 10°, nochmals besonders bevorzugt kleiner als 5°, nochmals besonders bevorzugt kleiner als 1°. Besonders bevorzugt ist jedoch ein Winkel von 30°. Ein Winkel dieser Größe kann einen guten Kompromiss zwischen einfachem einbringen des zweiten Filters in die Zwischenräume des ersten Filters und dem Bereitstellen einer großen Filteroberfläche des ersten Filters darstellen. Alternativ zur Dreiecksform kann der Querschnitt im Profil einer Sinuskurve entsprechen, oder eine allgemeine Wellenform aufweisen, oder rundmäanderförmig oder eckig-mäanderförmig sein. Die Profile können auch gekappt sein, so dass beispielsweise die Dreiecke den Querschnitten von Kegelstümpfen oder Trapezen entsprechen oder die Wellenform nur als Wiederholung von Wellensegmenten ausgeführt ist. Die Formen können unmittelbar aneinander angrenzend angeordnet sein oder durch Abschnitte getrennt sein, die eine ebene Querschnittsform aufweisen. Auch können sich unterschiedliche Profilformen abwechseln. All diese Ausführungsformen führen dazu, dass auch am zweiten Filter Zwischenräume gebildet werden und dass die Filterfläche des zweiten Filters gegenüber der Begrenzungsfläche, die sie umschließt, vergrößert ist, so dass das zweite Filter eine sehr große Fläche bereitstellen kann, die von z.B. Saugluft durchströmt werden kann.

Bevorzugt weist die Filterfläche des zweiten Filters ein Querschnittsprofil auf, das passgenau mit dem Querschnittsprofil des ersten Filters übereinstimmt, so dass das zweite Filter so in das ersten Filter eingebracht, bevorzugt eingesteckt oder per Reißverschlussverfahren verbunden, werden kann, dass das zweite Filter die Zwischenräume des ersten Filters zu 100 % ausfüllen kann. Dann liegen bei einem dreieckigen Querschnittsprofil die äußeren Spitzen des zweiten Filters vollständig an den inneren Spitzen des ersten Filters in den Zwischenräumen an. Alternativ kann in einem Herstellungsverfahren, das grundsätzlich nicht auf ein bestimmtes Material für das zweite Filter beschränkt ist, das zweite Filter mit dem ersten Filter zu einem Sandwich übereinandergelegt, vorzugsweise durch partielles verkleben, verschweißen oder auch zusammenklammern oder vergleichbare Schritte zusammengefügt, werden und in einem nachfolgenden Schritt das Sandwich aus den Filtern zwischen mindestens einer Begrenzungsfläche angeordnet wird, so dass das Sandwich eine Filterfläche aufweist, die gegenüber einem minimalen, von der mindestens einen Begrenzungsfläche umschlossenen Fläche vergrößert ist. Um das zu erreichen, ist bevorzugt, dass das Filtersandwich in einem Schritt in eine zumindest abschnittsweise zusammenhängende Profilform gebracht wird, bei der zwischen einzelnen Abschnitten des Sandwiches mindestens ein Zwischenraum gebildet wird, oder eine solch enge Profilform erreicht wird, dass zwischen einzelnen Abschnitten des Sandwiches kein Zwischenraum mehr verbleibt. Dazu wird das Sandwich bevorzugt ziehharmonika-artig gefaltet. Ein bevorzugtes Verfahren dafür ist das Plissieren. Alternativ kann das zweite Filter aber auch ein vom ersten Filter abweichendes Profil aufweisen, so dass die Zwischenräume des ersten Filters zu weniger als 100% ausgefüllt werden können. Beispielsweise kann das Querschnittsprofil des ersten Filters im Wesentlichen aneinandergereihte Dreiecke aufweisen, während die in den Dreiecken gebildeten Zwischenräume mit einem Oberflächenprofil des zweiten Filters, dessen Querschnitt Kegelstümpfen entspricht, nur zu 40 % ausgefüllt sind. Eine Vielzahl von anderen Kombinationen von Oberflächenprofilen ist ebenfalls möglich.

Eine alternative Methode zum Einbringen des zweiten Filters in Zwischenräume des ersten Filters, so dass der zweite Filter im Querschnitt ein Profil von nebeneinander angeordneten geometrischen Figuren aufweist, ist, dass das zweite Filter als Schaumstoffausgangsmaterial in flüssiger Form in mindestens einen Zwischenraum des ersten Filters eingebracht wird und eine anschließende Reaktion des Schaumstoffausgangsmaterials den mindestens einen Zwischenraum des ersten Filters mindestens teilweise mit Schaumstoff ausfüllt. Bevorzugt füllt es ihn nach der Reaktion vollständig mit Schaumstoff aus. Bevorzugt sind entsprechend alle Zwischenräume nach diesem Prozess vollständig mit Schaumstoff ausgefüllt. Alternativ können aber auch unterschiedliche Mengen von Ausgangsmaterial in die Zwischenräume eingefüllt werden, so dass unterschiedliche Füllgrade in den jeweiligen Zwischenräumen erreicht werden können. Gegebenenfalls kann daraufhin über die gewünschte Außenkontur des Filtersystems überstehender Schaumstoff beispielsweise mit einer scharfen Kante, wie einer Klinge, vom Filtersystem getrennt werden.

Es ist bevorzugt, dass das Filtersystem als Platte ausgebildet ist. Erreichbare Vorteile sind dadurch, dass das Filtersystem einfach gehandhabt werden kann, es kompakt baubar ist und platzsparend zu lagern. Bevorzugt kann eine solche Platte in Form einer quaderförmigen Platte oder einer Kreisscheibenplatte ausgebildet sein. Alternativ kann die Platte auch eine andere geometrische Umfangslinie haben, z.B. elliptisch geformt sein. Die minimale Querschnittsfläche der Platte, die eine Seite der Platte mit der anderen Seite der Platte verbindet, ist bedingt durch das Querschnittsprofil des ersten Filters gegenüber diesem verringert. Ein solches Filtersystem kann als Cartridge ausgebildet sein. So eine Filtercartridge kann einfach austauschbar sein. Besonders bevorzugt weist solch eine Cartridge die gleichen Außenmaße, wie eine Cartridge mit einem Filtersystem ohne zweiten Filter, das Polymermaterial umfasst, auf. So kann ein Raumpflegegerät einfach durch den Austausch der Cartridge um die geräuschreduzierende Funktion erweitert werden. Auch kann das Filtersystem in Zylinderform ausgebildet sein. Bevorzugt ist die Zylinderform eine Kreiszylinderform. Alternativ kann es auch eine Zylinderform mit einem viereckigen Querschnitt sein, zum Beispiel quadratisch, oder eine Zylinderform mit einem anderen vieleckigen Querschnitt, zum Beispiel einem 3-, 5-, 6-, 7-, 8- oder 9-eckigen oder auch sternförmigen Querschnitt. Auch kann der Zylinder radiale Undulationen aufweisen, die Zwischenräume des ersten Filters verursachen. Die Ausführungsform eines Zylinders bietet sich für die Verwendung in einem Raumpflegegerät mit Wirbelsenkabscheidetechnologie besonders an. Das erste Filter und das zweite Filter bilden dann bevorzugt die Mantelfläche und formen somit die grundsätzliche Zylinderform, durch die das erste Filter und das zweite Filter durch ihre geometrischen Querschnittsmuster abweichen können. Eine imaginäre geometrische Begrenzungsfläche in Zylinderform, die die radial äußersten Punkte des äußersten Filters genau berührt und somit das Filtersystem genau einschließt, ist bezüglich ihrer Oberfläche gegenüber der Filterfläche des ersten Filters aufgrund der Faltung des Filters verkleinert.

### Kurzbeschreibung der Zeichnungen

Weitere vorteilhafte Ausgestaltungen der Erfindung werden nachfolgend anhand von in den Zeichnungen dargestellten Ausführungsbeispielen, auf welche die Erfindung jedoch nicht beschränkt ist, näher beschrieben.

Es zeigen schematisch:
- Fig. 1: eine Schrägaufsicht mit Querschnitt durch eine erste Ausführungsform eines erfindungsgemäßen Filtersystems;
- Fig. 2: eine Schrägaufsicht mit Querschnitt durch eine zweite Ausführungsform eines erfindungsgemäßen Filtersystems;
- Fig. 3: einen Querschnitt durch die erste Ausführungsform nach Fig. 1 eines erfindungsgemäßen Filtersystems;
- Fig. 4: einen Querschnitt durch eine dritte Ausführungsform eines erfindungsgemäßen Filtersystems;
- Fig. 5: einen Querschnitt durch eine vierte Ausführungsform eines erfindungsgemäßen Filtersystems;
- Fig. 6: eine Schrägaufsicht mit Querschnitt durch eine fünfte Ausführungsform eines erfindungsgemäßen Filtersystems;
- Fig. 7: einen Querschnitt in Längsrichtung durch die fünfte Ausführungsform nach Fig. 6 eines erfindungsgemäßen Filtersystems;
- Fig. 8: eine Schrägaufsicht mit Querschnitt durch eine sechste Ausführungsform eines erfindungsgemäßen Filtersystems;
- Fig. 9: einen Querschnitt Längsrichtung durch die sechste Ausführungsform nach Fig. 8 eines erfindungsgemäßen Filtersystems;
- Fig. 10: eine Schrägaufsicht auf ein zweites Filter für ein erfindungsgemäßes Filtersystem;
- Fig. 11: eine Schrägaufsicht auf ein erstes Filter und ein zweites Filter nach Fig. 10 in einem Herstellungsschritt eines erfindungsgemäßen Filtersystems;
- Fig. 12a: eine Schrägaufsicht und 12b eine Frontansicht auf ein erstes Filter und ein zweites Filter in einem anderen Herstellungsschritt ersten Herstellungsverfahrens eines erfindungsgemäßen Filtersystems;
- Fig. 13a: eine Schrägaufsicht und 13b eine Frontansicht auf ein erstes Filter und ein zweites Filter in einem Herstellungsschritt eines zweiten Herstellungsverfahrens eines erfindungsgemäßen Filtersystems;
- Fig. 14a: eine Frontansicht und 14b eine Schrägaufsicht auf ein erstes Filter und ein zweites Filter, das auf beiden Seiten des ersten Filters angeordnet ist, in einem Herstellungsschritt eines erfindungsgemäßen Filtersystems;
- Fig. 15a: eine Schrägaufsicht auf ein zweites Filter mit gekappten Dreiecken als Querschnittsmuster;
- Fig. 15b: und 15c jeweils einen Querschnitt durch ein zweites Filter mit gekappten Dreiecken als Querschnittsmuster nach Fig. 15a;
- Fig. 16a: eine Schrägaufsicht auf ein mehrteiliges zweites Filter bestehend aus einzelnen Dreieckssegmenten;
- Fig. 16b: einen Querschnitt durch ein mehrteiliges zweites Filter bestehend aus einzelnen Dreieckssegmenten nach Fig. 16a, bei dem die Segmente jeweils unterschiedlich beschaffen sind;
- Fig. 17: einen Querschnitt durch ein Herstellungsverfahren eines ersten Filters und eines zweiten Filters, bei dem das erste Filter und das zweite Filter als Rollenware erst zu einem Sandwich übereinandergelegt werden und anschließend das Sandwich gefaltet wird.
- Fig. 18a und 18b: Messdiagramme des von einem Staubsauger abgegebenen Schalldrucks in Abhängigkeit von der Schallfrequenz, gemessen für ein erstes Filter ohne zweites Filter in seinen Zwischenräumen (18a, Stand der Technik) und für ein erstes Filter mit zweitem Filter, das ein Polymermaterial umfasst, in seinen Zwischenräumen.

### Detaillierte Beschreibung von Ausführungen der Erfindung

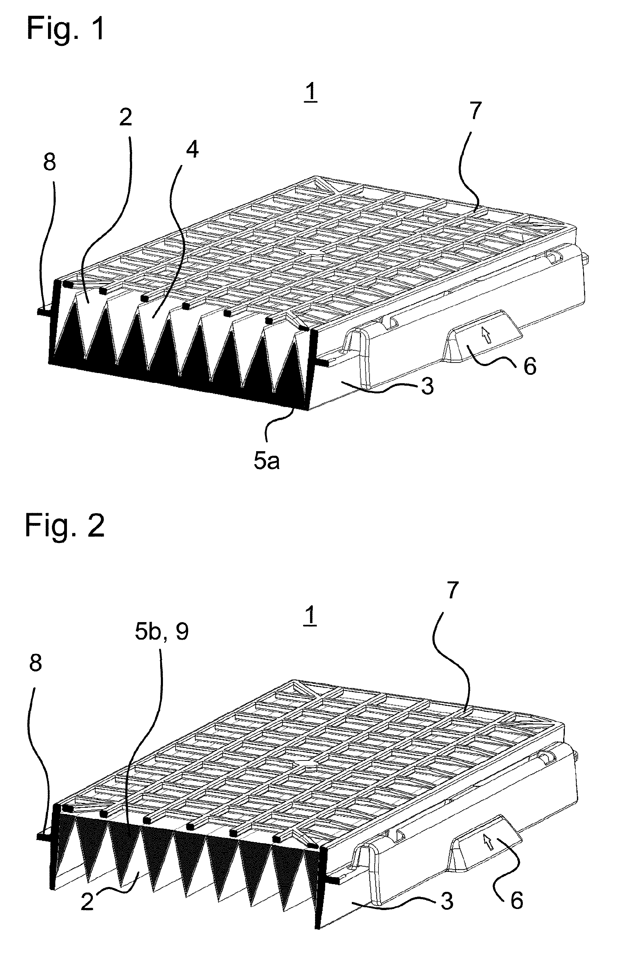

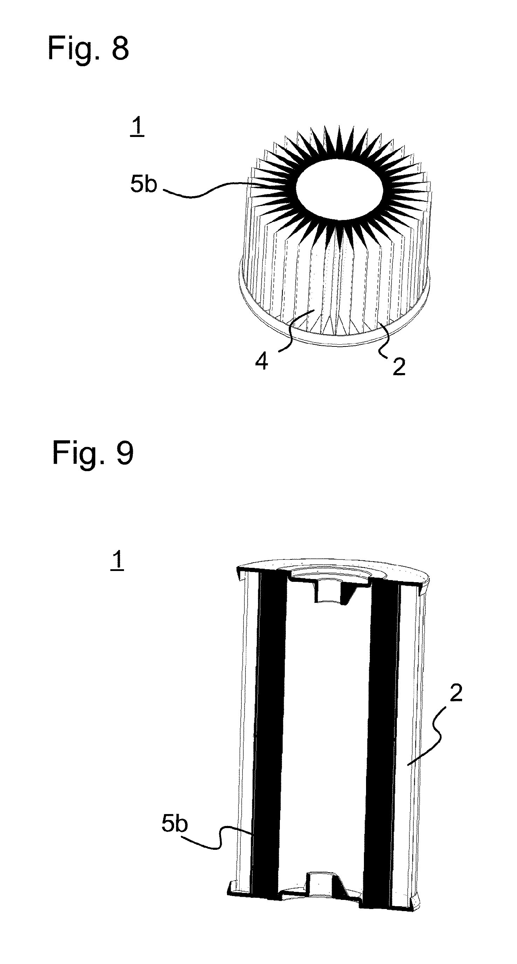

Die Figuren 1 bis 16a zeigen verschiedene Ausführungsformen erfindungsgemäßer Filtersysteme (1) für ein Raumpflegegerät und Elemente, die für ein solches Filtersystem (1) von Bedeutung sind.

Figur 1 zeigt eine Ausführungsform eines erfindungsgemäßen Filtersystems (1). Das Filtersystem (1) ist als Filterkassette in Form einer quaderförmigen Platte ausgebildet. Das erste Filter (2) in dieser Filterkassette ist ein luftdurchlässiges HEPA-Filter. Das HEPA-Filter ist als einstückiges Gewebe ausgeführt und weist im Querschnitt ein gefaltetes Profil von nebeneinander angeordneten geometrischen Figuren auf, in diesem Fall speziell Dreiecke, die unmittelbar aneinander angrenzen und einen Öffnungswinkel von etwa 30° aufweisen. Durch dieses Querschnittsprofil ist die Filterfläche des membranartigen ersten Filters (2) gegenüber einer minimalen, von der Wand der Filterkassette als Begrenzungsfläche (3) umschlossenen Fläche vergrößert. Entsprechend weist das erste Filter (2) zwischen einzelnen Filterabschnitten eine Vielzahl von Zwischenräumen (4) auf.

Einseitig am ersten Filter (2) ist ein einteiliges zweites Filter (5a) angeordnet. Dieses ist bezogen auf die Lufttransportrichtung dem ersten Filter (2) nachgelagert. Es sind nicht alle Zwischenräume (4) des ersten Filters (2) mit dem zweiten Filter (5a) gefüllt, sondern nur die Zwischenräume (4), die bezogen auf die Lufttransportrichtung hinter dem ersten Filter (2) angeordnet sind, in diesem Fall also die Hälfte der Zwischenräume (4). Das zweite Filter (5a) weist ebenfalls im Querschnitt ein Profil von nebeneinander angeordneten geometrischen Figuren auf. Um einen möglichst engen Kontakt zwischen dem ersten Filter (2) und dem zweiten Filter (5a) sicherzustellen, ist das zweite Filter (5a) in Zwischenräume (4) des ersten Filters (2) mit Übermaß eingepresst. So ist sichergestellt, dass das zweite Filter (5a) erfindungsgemäß an der Filterfläche des ersten Filters (2) anliegt. Das zweite Filter (5a) besteht in dieser Ausführungsform aus einem offenporigen Material, nämlich aus Melaminschaum. Melaminschäume sind neben den PU-; PE-, PS- und PP-Schäumen für ihre geräuschdämmende Wirkung bekannt. Dadurch, dass das zweite Filter (5a) in Lufttransportrichtung dem ersten Filter (2), also hier dem HEPA-Filter, nachgelagert ist, können geräuschentwickelnde Luftverwirbelungen hinter dem HEPA-Filter wirkungsvoll verringert werden, so dass die Geräuschbelastung, die von der durch das HEPA-Filter strömenden Luft verursacht wird, vermindert werden kann. Um das Filtersystem (1) gemäß dieses ersten Ausführungsbeispiels günstiger herstellen zu können, füllt das zweite Filter (5a) gemäß der ersten Ausführungsform die gefüllten Zwischenräume (4) des ersten Filters (2) zu mehr als 30 % aus, jedoch nicht zu 100 %. So kann Material gespart werden, ohne dass die geräuschmindernde Wirkung des zweiten Filters (5a, 5b, 5c) wesentlich beeinträchtigt wird.

Die dargestellte Filterkassette entspricht in ihren Maßen einer Filterkassette ohne zweites Filter (5a) zur Geräuschdämmung. Daher kann die Filterkassette bei entsprechend geeigneten Staubsaugern sehr einfach ausgetauscht werden. So kann über das hinzugefügte zweite Filter (5a) kostengünstig eine geräuschreduzierende Funktion bereitgestellt werden. Um die Handhabung der Filterkassette weiter zu vereinfachen, umfasst die Filterkassette einen Handgriff (6) zum Lösen und Einsetzen der Filtercartridge in einen Staubsauger. Zudem umfasst sie ein Abdeckgitter (7) um mechanische Schäden am HEPA-Filter vermeiden zu können. Weiter erhöht das Abdeckgitter (7) die Stabilität des Filterrahmens. Außerdem umfasst sie einen umlaufenden Steg (8) um eine sichere Montage der Filterkassette in einem dafür geeigneten Raumpflegegerät sicherstellen zu können.

Eine andere Ausführungsform eines erfindungsgemäßen Filtersystems (1), das als Platte ausgebildet ist, ist in Figur 2 zu erkennen. Eine Vielzahl von Merkmalen stimmt mit denen aus dem ersten Ausführungsbeispiel überein. Jetzt ist jedoch das zweite Filter (5b) im Unterschied zum ersten Ausführungsbeispiel bezogen auf die Lufttransportrichtung dem ersten Filter (2) vorgelagert. Somit kann eine vorgeschaltete Grobstaubfilterung erfolgen, so dass das erste Filter (2) vermindert mit grobem Staub zugesetzt wird und seltener getauscht werden muss. Ein weiterer wesentlicher Unterschied dieser Ausführungsform im Vergleich zur Ausführungsform aus Figur 1 ist, dass das zweite Filter (5b) mehrteilig ausgeführt ist. Einzelne vorgefertigte längliche Segmente (9) sind in Zwischenräume (4) des ersten Filters (2) eingepresst worden. Sie haben jeweils eine dreieckige Querschnittsform und weisen ein Übermaß auf. Die mehrteilige Ausführung des zweiten Filters (5b) ist von Vorteil, wenn diverse erste Filter (2) mit gleichartiger Faltung, aber unterschiedlicher Fläche mit einem zweiten Filter (5b) in den Faltungszwischenräumen (4) versehen werden sollen. Somit ist das zweite Filter (5b) vielseitiger einsetzbar. Außerdem verdeutlicht diese Ausführungsform, dass auch solche zweite Filter (5b) in Frage kommen, bei denen Zwischenräume (4) des ersten Filters zu 100 % ausgefüllt sind. Dies kann die Schallschutzwirkung durch eine Erhöhung des Staudruckes vor dem ersten Filter (2) verbessern.

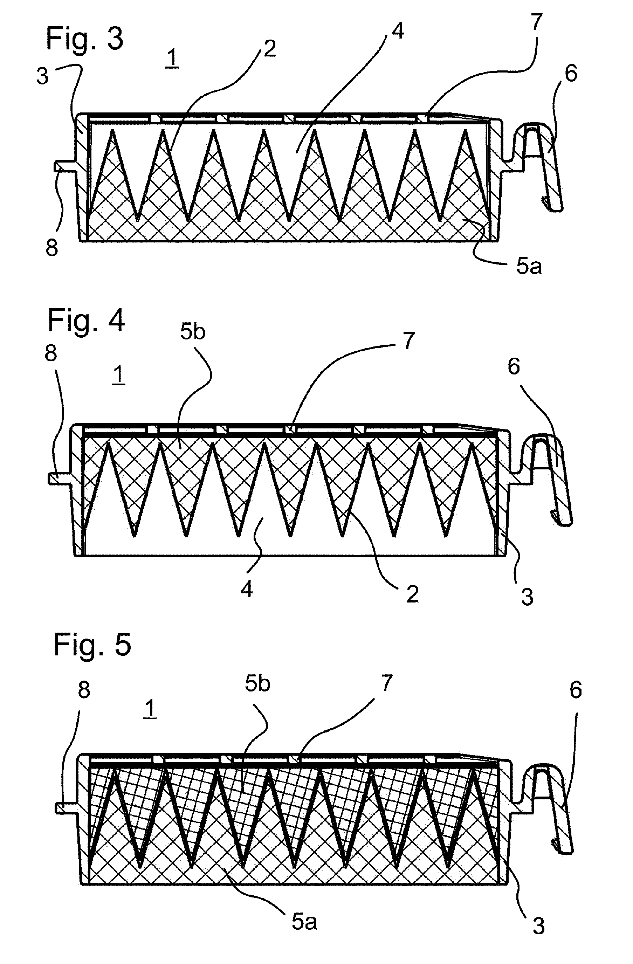

Figur 3 zeigt Fig. 1 im Querschnitt und Figur 4 zeigt eine alternative Ausführungsformen der Fig. 2 im Querschnitt der Filtersystemen (1), bei denen das zweite Filter (5a) manche Zwischenräume (4) des ersten Filters (2) jeweils zu 100 % ausfüllt, das zweite Filter (5a) jedoch einstückig ausgeführt ist (Fig. 4). Dabei ist das zweite Filter (5a) gemäß Figur 3 dem ersten Filter (2) bezogen auf die Lufttransportrichtung nachgelagert, während das zweite Filter (5b) in Figur 4 dem ersten Filter (2) bezogen auf die Lufttransportrichtung vorgelagert ist.

Figur 5 zeigt ein Ausführungsbeispiel, bei dem dem ersten Filter (2) jeweils ein zweites Filter (5a, 5b) sowohl vor- als auch nachgelagert ist. In diesem Ausführungsbeispiel sind alle Zwischenräume (4) des ersten Filters (2) zu 100 % mit einem zweiten Filter (5a, 5b) ausgefüllt. Dies kann eine Kombination der oben geschilderten Vorteile ermöglichen. In diesem Fall sind zweite Filter (5a, 5b) dargestellt, die sich in ihrer Porosität unterscheiden, beide jedoch jeweils aus Melaminschaum gefertigt sind. Das vorgelagerte zweite Filter (5b) hat eine Porenzahl von 200 Poren pro Inch. Das nachgelagerte zweite Filter (5a) hat eine Porenzahl von 120 Poren pro Inch. Das dem ersten Filter (2) vorgelagerte zweite Filter (5b) ist in diesem Fall mehrteilig ausgeführt. Das dem ersten Filter (2) nachgelagerte zweite Filter (5a) ist als einteilige Schaumstoffmatte ausgeführt.

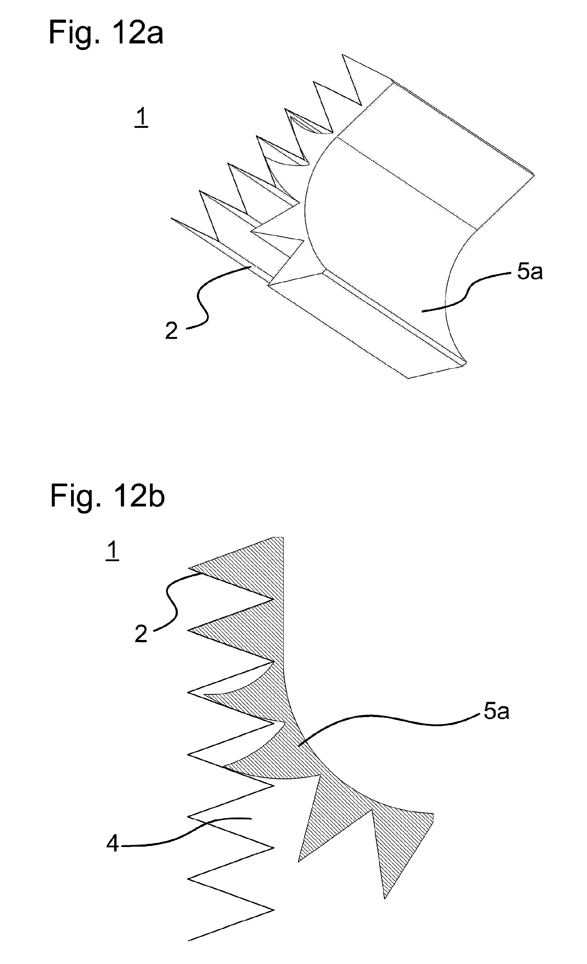

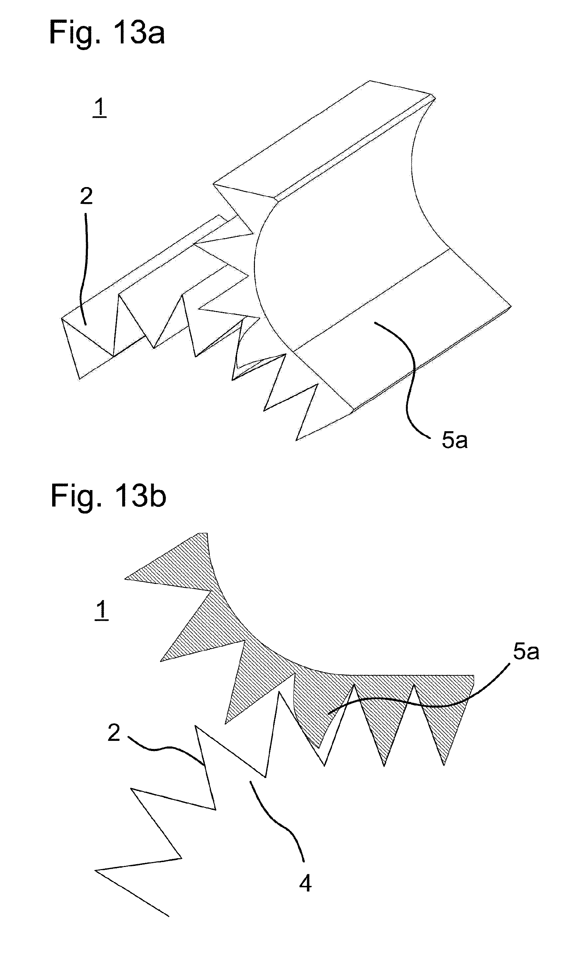

Filtersysteme (1), die in den Figuren 1 bis 5 als Platte ausgebildet sind, und mindestens einen einstückigen zweiten Filter (5a, 5b) aufweisen, können besonders günstig und zuverlässig in einem Reißverschlussverfahren gefertigt werden. Ausführungsformen dieses Reißverschlussverfahrens sind gezeigt in den Figuren 12a, 12b, 13a und 13b. Entsprechend ist es gemäß den Figuren 12a und 12b möglich, das Profil des zweiten Filters (5a) in die Zwischenräume (4) des ersten Filters (2) einzurollen, während das erste Filter (2) selbst nicht verbogen oder verformt werden muss. Die Spitzen des zweiten Filters 5a, welche gerade in Kontakt mit dem ersten Filter (2) gekommen sind, verformen sich auf Grund der elastischen Eigenschaften des zweiten Filters (5a) und gleiten an den Wänden des ersten Filters (2) in die Kontur hinein. Nach einem Einrollvorgang entspannt sich die Kontur des zweiten Filters (5a) und schmiegt sich in die Kontur des ersten Filters (2) an. Allerdings ist es, wie in den Figuren 13a und 13b verdeutlicht, auch möglich, sowohl das erste Filter (2) als auch das zweite Filter (5a) zu krümmen und dann beide miteinander reisverschlussähnlich zu verzahnen. Es hat sich als besonders vorteilhaft erwiesen, den Öffnungswinkel der Zwischenräume (4) beim ersten Filter (2) und beim zweiten Filter (5a) jeweils auf 30° festzulegen. So kann eine besonders zuverlässige Verzahnung im Reißverschlussverfahren erreicht werden. Für das Herstellungsverfahren ist es unerheblich, aus welchem Material das zweite Filter (5a) besteht, solange es zur Verarbeitung ausreichend biegsam ist. Besonders von Vorteil ist es hierbei die Spitzen des zweiten Filters zu kappen (nicht dargestellt). Dadurch kann sichergestellt werden, dass das zweite Filter sicher in die Zwischenräume des ersten Filters gelangt und an den beiden Flächen des ersten Filters anliegt.

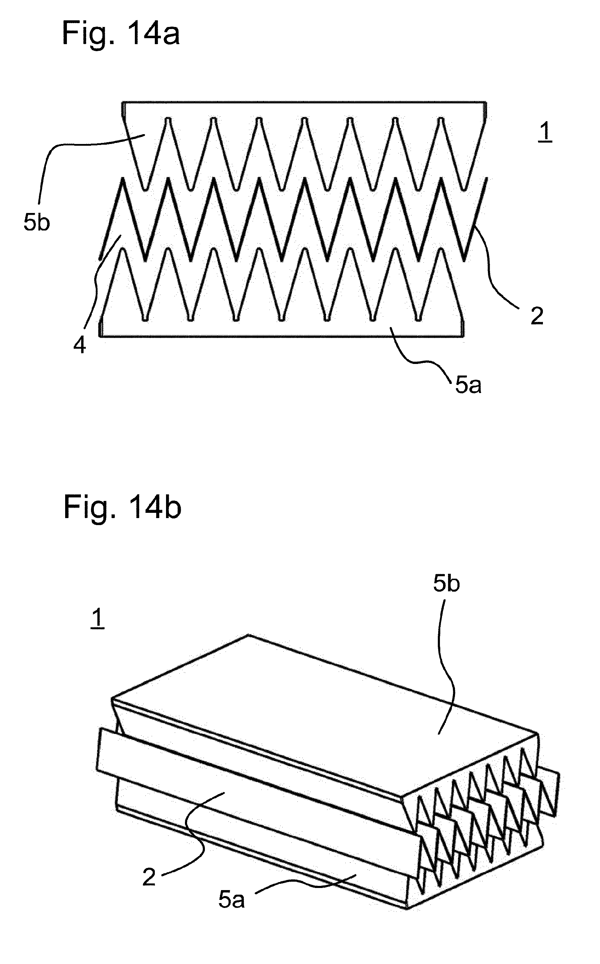

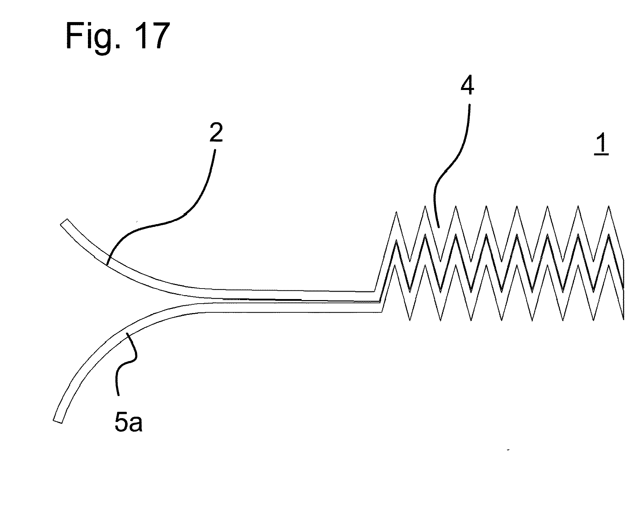

Ein Verfahrensschritt aus einem Verfahren bei dem in diesem Beispiel ein Filtersystem (1) mit einem ersten Filter (2) und zwei zweiten Filtern (5a, 5b) gebildet wird, ist in den Figuren 14a und 14b zu sehen. Die drei Filterschichten werden vorgeformt übereinander gelegt. Daraufhin werden die zweiten Filter (5a, 5b) in die Zwischenräume (4) des ersten Filters (2) verpresst (nicht dargestellt). Schließlich werden das erste Filter (2) und die beiden zweiten Filter (5a, 5b) in einer Filterkassette, die entsprechende Begrenzungsflächen (3) aufweist, montiert (nicht dargestellt). Figur 17 zeigt, dass aber auch möglich ist, die Filterschichten von einer Rolle abzuwickeln und anschließend erst in Form eines Sandwiches aus mindestens einem ersten Filter (2) und einem zweiten Filter (5a) zu stapeln und in einem späteren Schritt in die gewünschte Querschnittsform, beispielsweise ein Dreiecksprofil, zu bringen, statt die einzelnen Filterschichten erst zu falten und dann zu stapeln. Dies kann eine besonders einfache Möglichkeit sein, ein erfindungsgemäßes Filtersystem (1) zu produzieren, da auf das komplexere Reißverschlussverfahren verzichtet werden kann, und trotzdem eine sehr enge Anlage zwischen den Filterschichten (2, 5a) erreicht werden kann. Insbesondere ist dieses Verfahren günstig, wenn das erste Filter (2) und das zweite Filter (5a) auf Rollen aufgerollt zur Weiterverarbeitung zum Filtersystem (1) bereitgestellt werden. Alternativ können die Ausgangsmaterialien des ersten und des zweiten Filters als plane Zuschnitte bereitgestellt werden (nicht dargestellt). Das Falten der gestapelten Filter kann beispielsweise durch das dem Fachmann bekannte Plissieren erfolgen.

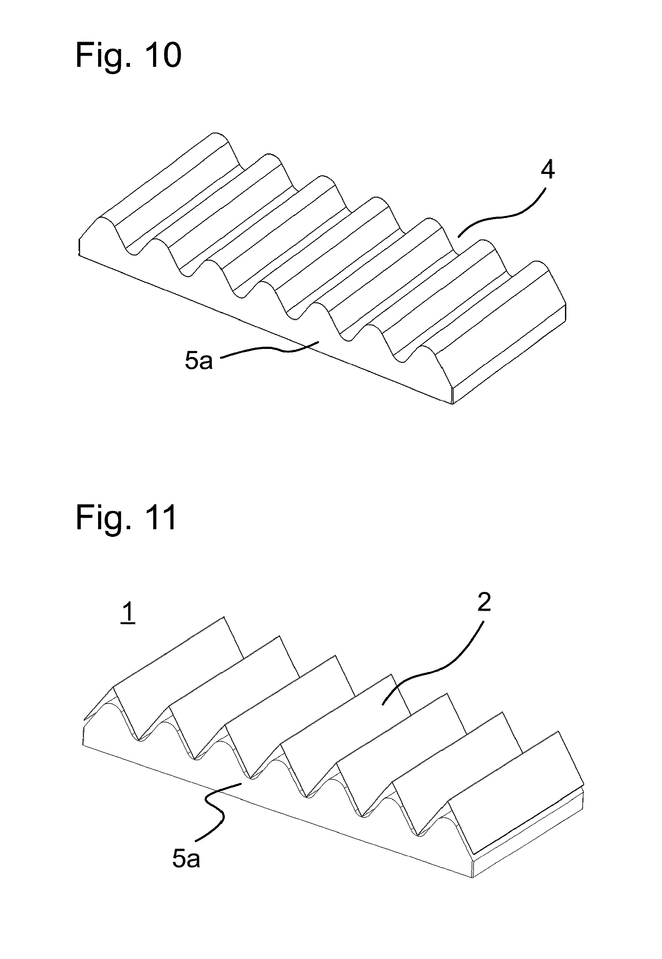

In den Figuren 10, 11, 15a, 15b, 15c, 16a und 16b sind verschiedene Ausführungsformen von zweiten Filtern (5a, 5b, 5c) zu sehen. Das zweite Filter (5a) in der Fig. 10 weist im Querschnitt ein Wellenprofil auf. Es ist ohne Abdeckgitter (7) und Begrenzungsfläche (3) dargestellt und entspricht bis auf das Querschnittsprofil im Wesentlichen dem zweiten Filter (5a) aus dem ersten Ausführungsbeispiel. Es kann, wie in Figur 11 zu sehen ist, ohne Weiteres mit einem ersten Filter (2) kombiniert werden, das im Querschnitt ein Dreieckprofil aufweist. Wird das zweite Filter (5a) in das erste Filter (2) verpresst, so kann trotzdem ein Anliegen des zweiten Filters (5a) an der Filterfläche des ersten Filters (2) in Zwischenräumen (4) des ersten Filters (2) erfolgen. Alternativ hierzu können die Formen auch umgekehrt sein: das erste Filter (2) weist im Querschnitt eine Wellenform auf und das zweite Filter (5a) eine Dreiecksform auf (nicht dargestellt).

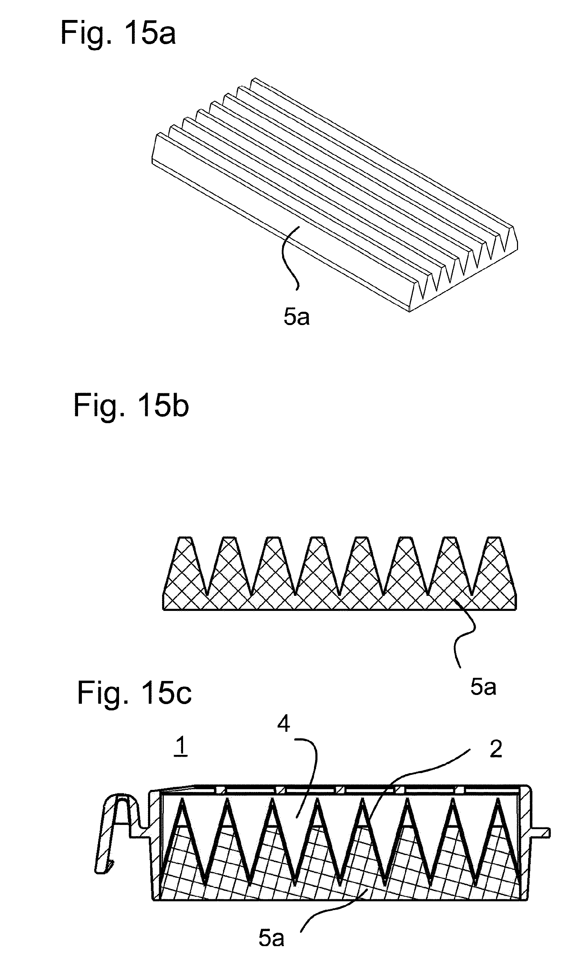

In den Figuren 15a, 15b und 15c sind zweite Filter (5a) mit Dreiecksprofilen zu sehen, deren Spitzen jeweils gekappt sind. So entsteht ein Profil mit einer Vielzahl von Kegelstümpfen, die an den Kegelstümpfen miteinander verbunden sind. Dieses kann sich bei einer Filtersystemproduktion, die das Reißverschlusssystem zum Herstellen des Filtersystems (1) verwendet, als besonders vorteilhaft erweisen, oder Material einsparen.

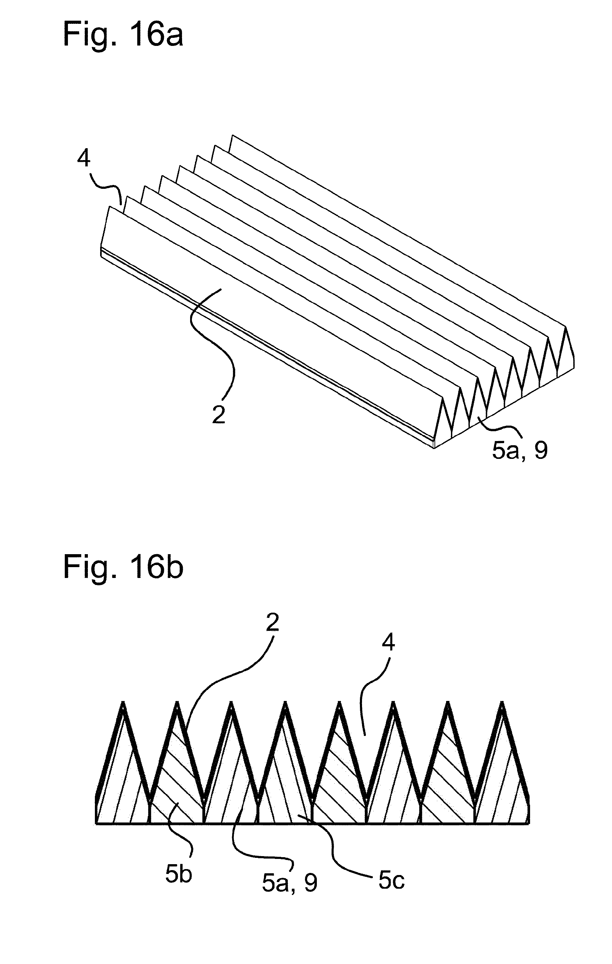

Die Figuren 16a und 16b zeigen nun abschließend zweite Filter (5a, 5b, 5c), die in mehreren Zwischenräumen (4) eines ersten Filters (2) angeordnet sind, und aus einer Vielzahl von Segmenten (9) bestehen, die in Fig. 16a jeweils gleiche Eigenschaften aufweisen und in Fig. 16b jeweils unterschiedliche Eigenschaften aufweisen. So kann über die Filterfläche des ersten Filters (2) verteilt zweite Filter (5a, 5b, 5c) mit unterschiedlichen Porositäten bereitgestellt werden, beispielsweise Abhängig von der erwarteten Strömungsgeschwindigkeit der durchtretenden Luft. Das jeweils dargestellte zweite Filter (5a, 5b, 5c) ist als Schaumstoffausgangsmaterial in die Zwischenräume (4) des ersten Filters (2) eingebracht worden. Daraufhin reagierte das Schaumstoffausgangsmaterial und füllte einige Zwischenräume (4) des ersten Filters (2) vollständig aus. Da gemäß der Ausführungsform aus Fig. 16b unterschiedliche Schaumstoffausgangsmaterialien in die Zwischenräume (4) eingebracht worden sind, konnten verschiedene zweite Filter (5a, 5b, 5c) bereitgestellt werden. Alternativ dazu kann aber auch beispielsweise bereits fertig reagierter Schaumstoff als zweiter Filter (5a, 5b, 5c), beispielsweise in Form von Schaumstoffflocken unterschiedlicher Porosität, in Zwischenräume (4) des ersten Filters (2) eingebracht werden.

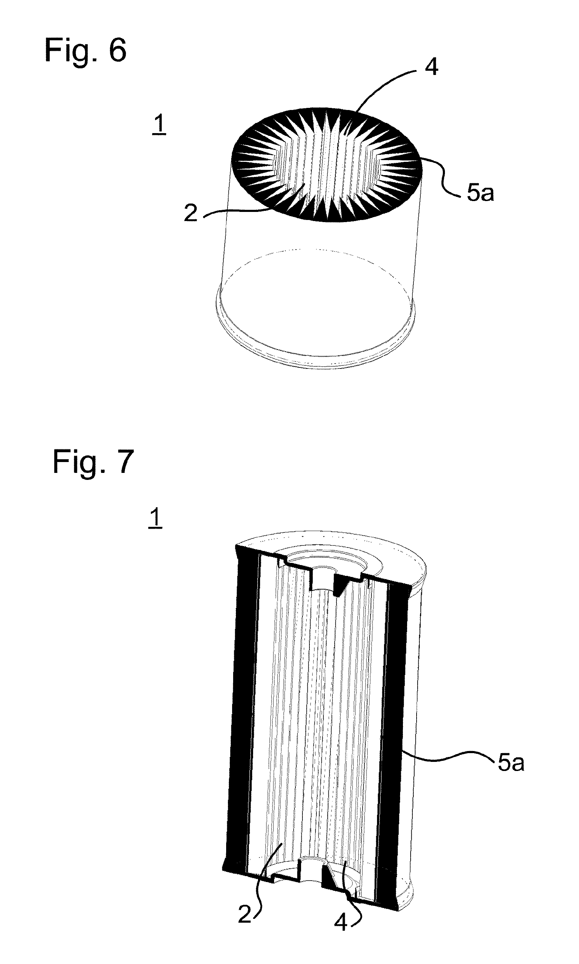

Das erfindungsgemäße Filtersystem (1) kann statt in der Plattenform beispielsweise auch als ein Filtercartridge in Zylinderform bereitgestellt sein. Die Figuren 6 bis 9 zeigen solch ein Filtersystem (1), das zylinderförmig ausgebildet ist. Auch in diesem Fall kann das zweite Filter (5a, 5b, 5c) dem ersten Filter (2) bezogen auf die Lufttransportrichtung nachgelagert, vorgelagert oder sowohl nachgelagert als auch vorgelagert sein. Es ergeben sich die gleichen Vorteile wie für das als Platte ausgebildetes Filtersystem (1). Die Produktionsverfahren sind gleichermaßen für einen zylinderförmigen Filter anwendbar. Die zusammengefügten ersten (2) und zweiten Filter (5a, 5b, 5c) müssen nur noch in eine zylinderförmige Form gebracht werden, beispielsweise, indem man plattenförmige Filtersysteme (1) rollt. Sind die zweiten Filter (5a, 5b, 5c) mit Übermaß eingepresst, so bleiben sie selbst dann an ihrer Position in den Zwischenräumen (4) des ersten Filters (2), wenn sich durch das Rollen des Filtersystems (1) der Öffnungswinkel der Zwischenräume (4) vergrößert.

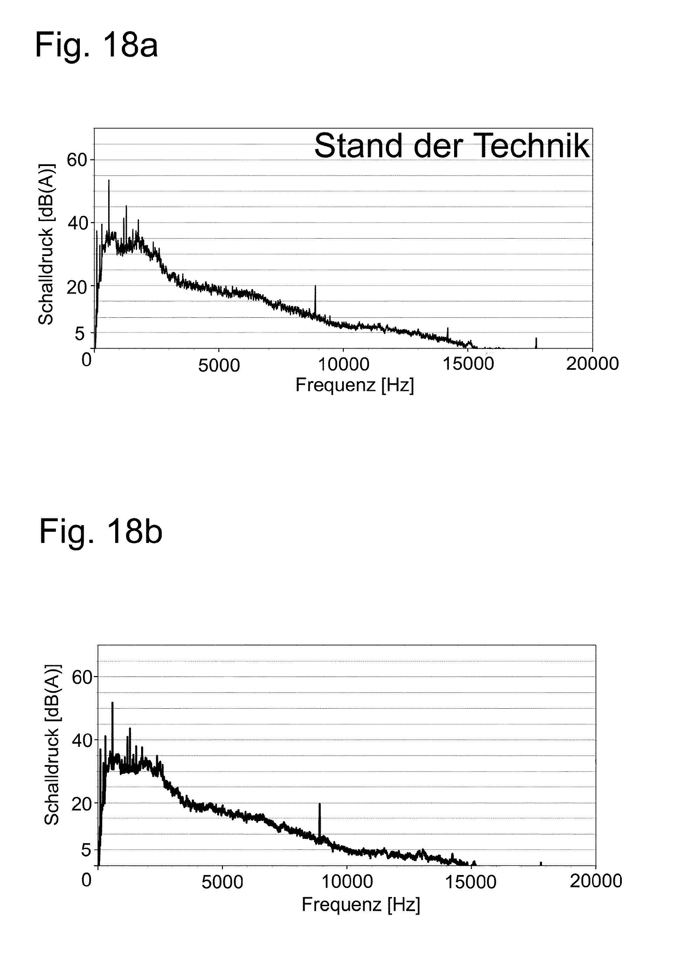

Das beschriebene Filtersystem (1) kann insbesondere die Aufgabe lösen, ein geräuschreduzierendes, bauraumsparendes, kompaktes und energieeffizientes Filtersystem (1) zur Verfügung zu stellen. Es trägt zur Geräuschreduzierung eines Raumpflegegerätes bei, wie in den Diagrammen der Figuren 18a (Stand der Technik; erstes Filter (2) ohne zweites Filter (3) in den Zwischenräumen (4)) und 18b (mit zweitem Filter (3)) zu erkennen ist. Insbesondere kann im Frequenzbereich oberhalb von 10.000 Hz eine Schalldruckreduzierung von über 2 dB(A) erreicht werden, wenn in den Zwischenräumen (4) des ersten Filters (2) erfindungsgemäß ein zweites Filter (3) angeordnet ist. Durch eine geeignete Anordnung eines zweiten Filters (5a, 5b, 5c) kann das erste Filter (2) zudem vor vorzeitiger Verschmutzung geschützt werden, so dass das Filtersystem (1) langlebiger wird. Die Bereitstellung in Quader- oder Zylinderform erlaubt es, das erfindungsgemäße Filtersystem (1) einfach in bereits vorhandenen Raumpflegegeräten nachzurüsten. Durch die dargestellten Verfahren ist es möglich, ein solches Filtersystem (1) auf unterschiedliche Weise, abhängig von den genauen Produktionsrandbedingungen und Produktionsverfahren, verbessert und vereinfacht herstellen zu können.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Filtersystem
- 2: Erstes Filter
- 3: Begrenzungsfläche
- 4: Zwischenraum
- 5a, 5b, 5c: Zweites Filter
- 6: Handgriff
- 7: Abdeckgitter
- 8: Steg
- 9: Segment

## Patentansprüche

1. Filtersystem (1) für ein Raumpflegegerät, das eine luftdurchlässige Membran als erstes Filter (2) umfasst, die zwischen mindestens einer Begrenzungsfläche (3) angeordnet ist, wobei die Membran eine Filterfläche aufweist, die gegenüber einer minimalen, von der mindestens einen Begrenzungsfläche (3) umschlossenen Fläche vergrößert ist, so dass sich zwischen einzelnen Abschnitten der Membran mindestens ein Zwischenraum (4) bildet, und wobei das Filtersystem (1) ein zweites Filter (5a, 5b, 5c) umfasst, das mindestens ein Polymermaterial umfasst, **dadurch gekennzeichnet, dass** in mindestens einem Zwischenraum (4) des ersten Filters (2) das zweite Filter (5a, 5b, 5c) an der Filterfläche des ersten Filters (2) anliegt.

2. Filtersystem (1) nach Anspruch 1, **dadurch gekennzeichnet, dass** das erste Filter (2) ein EPA-, ein HEPA-, oder ein ULPA-Filter ist.

3. Filtersystem (1) nach Anspruch 1 oder 2, **dadurch gekennzeichnet, dass** das Material des zweiten Filters (5a, 5b, 5c) offenporig ist.

4. Filtersystem (1) nach einem der vorherigen Ansprüche, **dadurch gekennzeichnet, dass** das zweite Filter (5a, 5b, 5c) einseitig am ersten Filter (2) angeordnet ist.

5. Filtersystem (1) nach einem der vorherigen Ansprüche, **dadurch gekennzeichnet, dass** das zweite Filter (5a, 5b, 5c) dem ersten Filter (2) bezogen auf die Lufttransportrichtung nachgelagert ist.

6. Filtersystem (1) nach einem der vorherigen Ansprüche, **dadurch gekennzeichnet, dass** zweite Filter (5a, 5b, 5c) mindestens einen Zwischenraum (4) des ersten Filters (2) zu mindestens 30% ausfüllt.

7. Filtersystem (1) nach einem der vorherigen Ansprüche, **dadurch gekennzeichnet, dass** das zweite Filter (5a, 5b, 5c) in mindestens einen Zwischenraum (4) des ersten Filters mit Übermaß eingepresst ist.

8. Filtersystem (1) nach einem der vorherigen Ansprüche, **dadurch gekennzeichnet, dass** das zweite Filter (5a, 5b, 5c) einteilig ausgeführt ist.

9. Filtersystem (1) nach einem der vorherigen Ansprüche, **dadurch gekennzeichnet, dass** das erste Filter (2) im Querschnitt ein Profil von nebeneinander angeordneten geometrischen Figuren aufweist.

10. Filtersystem (1) nach einem der vorherigen Ansprüche, **dadurch gekennzeichnet, dass** das zweite Filter (5a, 5b, 5c) im Querschnitt ein Profil von nebeneinander angeordneten geometrischen Figuren aufweist.

11. Filtersystem (1) nach einem der vorherigen Ansprüche, **dadurch gekennzeichnet, dass** das Filtersystem (1) als Platte ausgebildet ist.

12. Verfahren zur Herstellung eines Filtersystems (1) für ein Raumpflegegerät, das eine luftdurchlässige Membran als erstes Filter (2) umfasst, die zwischen mindestens einer Begrenzungsfläche (3) angeordnet ist und die Membran eine Filterfläche aufweist, die gegenüber einer minimalen, von der mindestens einen Begrenzungsfläche (3) umschlossenen Fläche vergrößert ist, so dass sich zwischen einzelnen Abschnitten der Membran mindestens ein Zwischenraum (4) bildet, wobei das Filtersystem (1) ein zweites Filter (5a, 5b, 5c) umfasst, das mindestens ein Polymermaterial umfasst, und in dem mindestens einen Zwischenraum (4) des ersten Filters (2) das zweite Filter (5a, 5b, 5c) an der Filterfläche des ersten Filters anliegend eingebracht wird.

13. Verfahren nach Anspruch 12, **dadurch gekennzeichnet, dass** das zweite Filter (5a, 5b, 5c) in mindestens einen Zwischenraum (4) des ersten Filters eingesteckt wird.

14. Verfahren nach Anspruch 12 oder 13, **dadurch gekennzeichnet, dass** das zweite Filter (5a, 5b, 5c) mit dem ersten Filter (2) reißverschlussartig gepaart wird.

15. Verfahren nach einem der Ansprüche 12 bis 14, **dadurch gekennzeichnet, dass** das zweite Filter (5a, 5b, 5c) in Flockenform in mindestens einen Zwischenraum (4) des ersten Filters eingebracht wird.

16. Verfahren nach einem der Ansprüche 12 bis 15, **dadurch gekennzeichnet, dass** das zweite Filter (5a, 5b, 5c) als Schaumstoffausgangsmaterial in flüssiger Form in mindestens einen Zwischenraum (4) des ersten Filters (2) eingebracht wird und eine anschließende Reaktion des Schaumstoffausgangsmaterials den mindestens einen Zwischenraum (4) des ersten Filters (2) mindestens teilweise mit Schaumstoff ausfüllt.

17. Verfahren zur Herstellung eines Filtersystem (1) für ein Raumpflegegerät, das eine luftdurchlässige Membran als erstes Filter umfasst, und ein zweites Filter (5a, 5b, 5c) umfasst, **dadurch gekennzeichnet, dass** in einem Schritt das zweite Filter (5a, 5b, 5c) mit dem ersten Filter (2) zu einem Sandwich übereinandergelegt wird und in einem nachfolgenden Schritt das Sandwich zwischen mindestens einer Begrenzungsfläche (3) angeordnet wird, so dass das Sandwich eine Filterfläche aufweist, die gegenüber einem minimalen, von der mindestens einen Begrenzungsfläche (3) umschlossenen Fläche vergrößert ist.

18. Verfahren nach Anspruch 17, **dadurch gekennzeichnet, dass** das zweite Filter (5a, 5b, 5c) mindestens ein Polymermaterial umfasst.

19. Verfahren nach Anspruch 17 oder 18, **dadurch gekennzeichnet, dass** das zweite Filter (5a, 5b, 5c) mindestens ein geräuschdämpfendes Material umfasst.

20. Verfahren nach einem der Ansprüche 17 bis 19, **dadurch gekennzeichnet, dass** das zweite Filter (5a, 5b, 5c) mindestens ein geräuschdämpfendes Material aus der Gruppe PU, PE, PS, PP und Melamin, bevorzugt deren Schäume, umfasst.

21. Verfahren nach einem der Ansprüche 17 bis 20, **dadurch gekennzeichnet, dass** das Sandwich in einem Schritt in eine zumindest abschnittsweise zusammenhängende Profilform gebracht wird, bei der zwischen einzelnen Abschnitten des Sandwiches mindestens ein Zwischenraum (4) gebildet wird.
